# EUROPEAN PATENT APPLICATION

(11) **EP 4 280 536 A1**
(43) Date of publication of application: **22.11.2023**
(21) Application number: 21919319.0
(22) Date of filing: 14.01.2021
(51) Int. Cl.: H04L 9/32

(54) **VERIFICATION SYSTEM, INFORMATION PROCESSING DEVICE, VERIFICATION METHOD, AND VERIFICATION PROGRAM**

(71) Applicant: FUJITSU LIMITED, Kawasaki-shi, Kanagawa 211-8588 (JP)
(72) Inventor: TSUNODA, Tadanobu, Kawasaki-shi, Kanagawa 211-8588 (JP); YASAKI, Koichi, Kawasaki-shi, Kanagawa 211-8588 (JP); NAKAMURA, Yosuke, Kawasaki-shi, Kanagawa 211-8588 (JP); KOJIMA, Rikuhiro, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2021/000954
(87) International publication number: WO 2022/153425

(57) **Abstract**

A verification system according to an aspect includes: a server configured to generate a hash value according to a first algorithm by using a public key associated with a user and a first message; and a terminal including a generation unit configured to generate a collision generation value by a second algorithm based on the first message, a second message, and a private key that is paired with the public key so that the hash value is generated in a case where the collision generation value is input to the first algorithm together with the public key and the second message, and a transmission unit configured to transmit the collision generation value and the second message to another terminal that is to be guaranteed that the second message has been provided by the user.

## Description

### FIELD

The present disclosure relates to a verification system, an information processing device, a verification method, and a verification program.

### BACKGROUND

With advancement of techniques for information and communication technology (ICT), a variety of techniques to support tasks have been developed. Then, the efficiency of tasks can be improved by using the variety of techniques to support tasks when task flows are executed. Meanwhile, cybercrime is on the rise, and there is a growing interest in techniques for executing the tasks with high reliability.

There is a digital signature technique as countermeasures against fraud such as impersonation. By using a digital signature, authenticity of a document exchanged in business or the like can be guaranteed, and reliability of tasks can be enhanced. Furthermore, to easily add a digital signature to a document, an observer electronic signature service installed in a cloud has appeared in recent years. Such a form of electronic signature service is sometimes referred to as a cloud electronic signature service and an observer cloud electronic signature service. In the cloud electronic signature service, a document issuer uploads a document to a cloud, and the electronic signature service adds a digital signature to the document and then passes the document to a recipient side. Thereby, for example, it is possible to cause the observer cloud electronic signature service to certify the document on behalf of the document issuer.

In this regard, techniques related to digital signatures are known (for example, Patent Document 1 and Patent Document 2).

### SUMMARY

### TECHNICAL PROBLEM

For example, in determination of application of a law or the like, it may be important to prove that a task such as creation or editing of a document has been performed on the will of a task executor. However, there is no technique capable of objectively verifying the task executor who has performed the task.

In one aspect, an object of the present disclosure is to provide a technique capable of verifying a task executor who has performed a task.

### SOLUTION TO PROBLEM

In one aspect of the present disclosure, a verification system includes: a server configured to generate a hash value according to a first algorithm by using a public key associated with a user and a first message; and a terminal including a generation unit configured to generate a collision generation value by a second algorithm based on the first message, a second message, and a private key that is paired with the public key so that the hash value is generated in a case where the collision generation value is input to the first algorithm together with the public key and the second message, and a transmission unit configured to transmit the collision generation value and the second message to another terminal that is to be guaranteed that the second message has been provided by the user.

### ADVANTAGEOUS EFFECTS OF INVENTION

It is possible to verify a task executor who performed a task.

### BRIEF DESCRIPTION OF DRAWINGS

FIG. 1 is a diagram illustrating a verification system according to an embodiment;
FIG. 2 is a diagram illustrating a functional block configuration of a server according to the embodiment;
FIG. 3 is a diagram illustrating a functional block configuration of a first terminal used by a task executor according to the embodiment;
FIG. 4 is a diagram illustrating a functional block configuration of a second terminal used by a third party who receives a guarantee by a verification service according to the embodiment;
FIG. 5 (i.e., FIGs. 5A, 5B, and 5C) is diagrams illustrating a chameleon hash algorithm according to the embodiment;
FIG. 6 is a diagram illustrating a flow of verification processing of a task executor according to the embodiment;
FIG. 7 is a diagram illustrating a message created in XML;
FIG. 8 is an exemplary diagram illustrating a display screen that prompts a task executor to edit an editing part;
FIG. 9 is a flowchart illustrating an operation flow of processing of accepting a certification request executed by a control unit of a server according to a first embodiment;
FIG. 10 is a flowchart illustrating an operation flow of processing of transmitting a second message m2 with certification executed by a control unit of the first terminal according to the first embodiment;
FIG. 11 is a flowchart illustrating an operation flow of verification request processing executed by a control unit of the second terminal according to the first embodiment;
FIG. 12 is a flowchart illustrating an operation flow of processing of transmitting a verification result executed by the control unit of the server according to the first embodiment;
FIG. 13 is a diagram illustrating person authentication and generation of a hash value and a collision generation value according to a second embodiment;
FIG. 14 is a diagram illustrating another example of person authentication and generation of a hash value and a collision generation value according to the second embodiment;
FIG. 15 is a flowchart illustrating an operation flow of processing of accepting a certification request executed by a server according to the second embodiment;
FIG. 16 is a flowchart illustrating an operation flow of processing of transmitting notification information with certification executed by a control unit of a first terminal according to the second embodiment;
FIG. 17 is a diagram illustrating addition of an execution certification operation code to a program according to a third embodiment;
FIG. 18 is a diagram illustrating a display screen displayed on a browser by execution of a processing program according to the third embodiment;
FIG. 19 is a diagram illustrating an example of generation of a hash value and a collision generation value using an operation result of the execution certification operation code according to the third embodiment;
FIG. 20 is a diagram for describing execution certification of each process of a task flow according to a fourth embodiment;
FIG. 21 is a diagram illustrating a case where a hash value h' based on a collision generation value according to a fifth embodiment is used for verification; and
FIG. 22 is a diagram illustrating a hardware configuration of a computer for implementing the server and the terminal according to the embodiment.

### DESCRIPTION OF EMBODIMENTS

Hereinafter, several embodiments of the present disclosure will be described in detail with reference to the drawings. Note that corresponding elements in a plurality of drawings are denoted by the same reference sign.

For example, according to legal interpretation of recent years, authenticity may be legally recognized if it can be proven that the signature has been made on the will of a document creator himself/herself even if a digital signature using a signature key of an issuer is not given. As described above, it may be important to prove that a task such as creation or editing of a document has been performed on the will of a task executor.

For example, by using an observer cloud electronic signature service, it is possible to receive provision of a certificate in which a history or a timestamp related to a signature are described as text information, and it is possible to improve reliability of the document. However, even if there is such a history or a timestamp related to a signature, it may be difficult to verify that the task such as creation or editing of a document has been performed on the will of the task executor. Therefore, it is desired to provide a technique capable of verifying the task executor who has performed the task. In some embodiments to be described below, a technique for verifying the task executor who has performed the task will be illustrated.

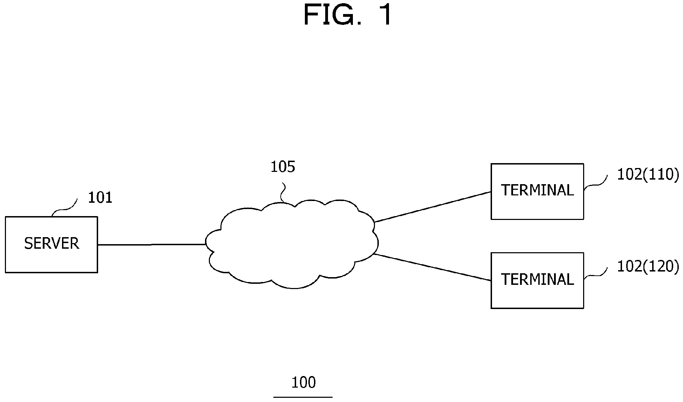

FIG. 1 is a diagram illustrating a verification system 100 according to an embodiment. The verification system 100 includes, for example, a server 101 and terminals 102. The server 101 and the terminals 102 may communicate with each other via a network 105, for example. The server 101 is, for example, a computer such as a server that provides a service for verifying the task executor who has performed the task. Furthermore, the terminals 102 are, for example, information processing devices such as a personal computer (PC), a mobile PC, a tablet terminal, a smartphone, a mobile phone, or the like that receives the service provided by the server 101. Note that the terminals 102 include, for example, a first terminal 110 used by the task executor who executes the task such as creation or editing of a document. In other words, a user of the first terminal 110 may include, for example, the task executor. Furthermore, the terminals 102 may include, for example, a second terminal 120 used by a third party who receives a guarantee of the task executor who has performed the task by the server 101.

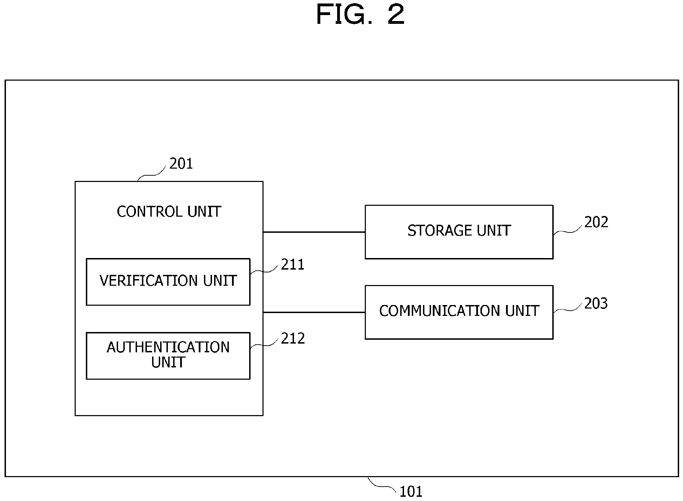

FIG. 2 is a diagram illustrating a functional block configuration of the server 101 according to the embodiment. The server 101 includes a control unit 201, a storage unit 202, and a communication unit 203, for example. The control unit 201 includes, for example, a verification unit 211 and the like, and may include other functional units. For example, the control unit 201 may include an authentication unit 212 in some embodiments. For example, as will be described below, the storage unit 202 of the server 101 may store information such as a public key, a random value, a message, and a hash value of the task executor. Details of each of these units and details of the information stored in the storage unit 202 will be described below.

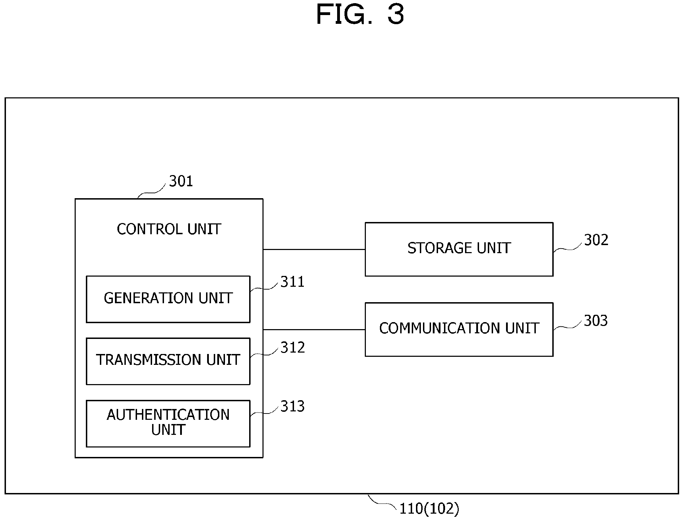

FIG. 3 is a diagram illustrating a functional block configuration of the first terminal 110 used by the task executor according to the embodiment. Note that the first terminal 110 is an example of the terminal 102. The first terminal 110 includes, for example, a control unit 301, a storage unit 302, and a communication unit 303. The control unit 301 includes, for example, a generation unit 311, a transmission unit 312, and the like, and may include other functional units. Furthermore, for example, the control unit 301 may include an authentication unit 313 in some embodiments. The storage unit 302 of the first terminal 110 may store, for example, information such as a private key, a random value, a message, and a collision generation value as will be described below. Details of each of these units and details of the information stored in the storage unit 302 will be described below.

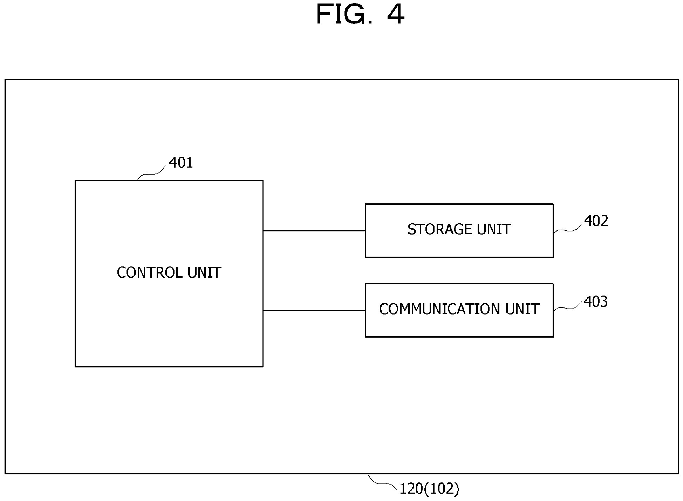

FIG. 4 is a diagram illustrating a functional block configuration of the second terminal 120 used by the third party who receives a guarantee by a verification service according to the embodiment. Note that the second terminal 120 is an example of the terminal 102. The second terminal 120 includes, for example, a control unit 401, a storage unit 402, and a communication unit 403. The control unit 401 controls each unit of the second terminal 120, for example. The storage unit 402 of the second terminal 120 may store, for example, information such as a message, a collision generation value, and a verification result as will be described below. Details of each of those units and details of the information stored in the storage unit 402 will be described below.

Then, in some embodiments to be described below, an example of guaranteeing the task executor who has performed a task using a chameleon hash algorithm will be described.

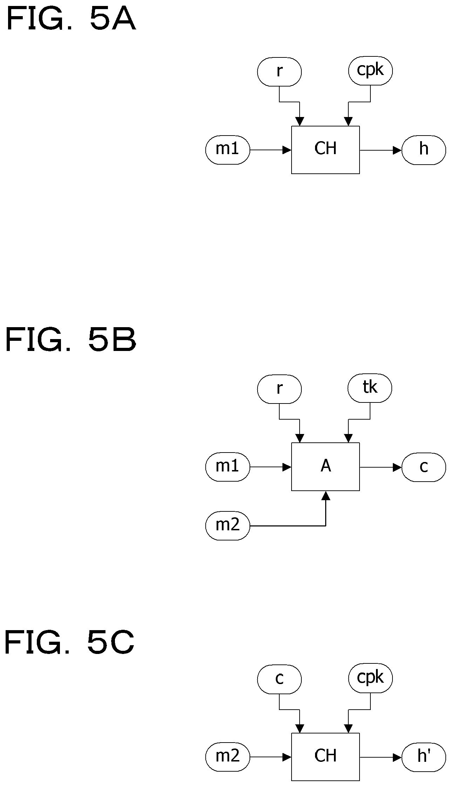

FIG. 5 (FIGs. 5A, 5B, and 5C) is diagrams illustrating a chameleon hash algorithm according to the embodiment. The chameleon hash algorithm is a set of three polynomial time algorithms including key generation, chameleon hash, and adaption.

The key generation is, for example, a key generation algorithm that outputs a public key cpk and a private key tk for a given security parameter.

The chameleon hash is a hash value calculation algorithm that outputs a hash value h to a given first message m1, a fixed-length random number r, and the public key cpk.

FIG. 5A illustrates generation of the hash value h by the chameleon hash (CH), and the hash value h is generated from the first message m1, the random number r, and the public key cpk. The chameleon hash may be referred to as, for example, a first algorithm.

FIG. 5B illustrates generation of a value c by the adaption. The adaption is an algorithm that generates the value c, using the first message m1, a new second message m2, the random number r, and the private key tk. The value c is generated to output the same hash value that collides with the hash value h generated from the first message m1, the random number r, and the public key cpk by the chameleon hash in a case of being input to the chameleon hash together with the second message m2 and the public key cpk. The adaption may be referred to as a collision calculation algorithm. Furthermore, the value c for generating a collision of the hash value h output by the adaption may be hereinafter referred to as a collision generation value. The adaption may also be referred to as, for example, a second algorithm.

FIG. 5C illustrates generation of a hash value h' that collides with the hash value h using the second message m2, the collision generation value c, and the public key cpk. The hash value h' generated in FIG. 5C is the same as the hash value h generated in FIG. 5A.

Then, in the embodiment, by using the chameleon hash algorithm having the above property, the server 101 guarantees that, for example, the second message m2 that the terminal 102 provides to the third party is provided by the task executor having the private key tk.

Hereinafter, the guarantee of the task executor using the chameleon hash algorithm according to the embodiment will be described. Note that the task executor may be, for example, a specific person or a group such as an association. Furthermore, the embodiment is not limited to the use of the chameleon hash algorithm. For example, another function and algorithm capable of obtaining the collision generation value c for outputting the same hash using the private key may be used as long as the first message m1 and the second message m2 are known.

### (First Embodiment)

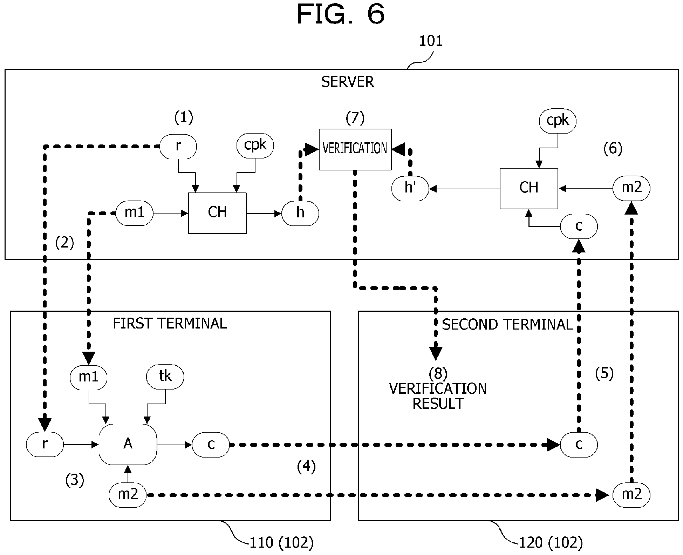

FIG. 6 is a diagram illustrating a flow of verification processing of a task executor according to a first embodiment. FIG. 6 illustrates a server 101, and a first terminal 110 and a second terminal 120 as terminals 102. The server 101 is, for example, a server that provides a verification service according to the embodiment. The first terminal 110 may be, for example, the terminal 102 used by the task executor. The second terminal 120 may be, for example, the terminal 102 used by a third party who receives a guarantee of the task executor by the verification service.

First, a control unit 301 of the first terminal 110 may generate a pair of a private key tk and a public key cpk in advance using a key generation algorithm of the above-described key generation and provide the public key cpk to the server 101.

Then, for example, when having received a verification request from the first terminal 110, a control unit 201 of the server 101 generates a random value corresponding to the verification request in order to use the random value as a random number r of the chameleon hash. The random value can be obtained from, for example, a function that outputs a different result for each execution. A random function, a shuffle function, or the like can be used as an example of the function that outputs a different result for each execution. The random value may be a random number in one example. The random value may be generated, for example, for each verification request, thereby increasing security.

Then, as illustrated in FIG. 6, the control unit 201 of the server 101 generates a hash value h by the chameleon hash using, for example, a first message m1, the random value r, and the public key cpk of the task executor who uses the first terminal ((1) in FIG. 6). Next, the server 101 provides the first message m1 and the random value r used to generate the hash value h to the first terminal 110 ((2) in FIG. 6). Note that, in another embodiment, the first message m1 may be, for example, a message provided by the first terminal 110 to the server 101, and the server 101 may omit provision of the first message m1 to the first terminal 110.

Then, the control unit 301 of the first terminal 110 generates a collision generation value c using the first message m1, the random value r, the private key tk of the task executor, and a second message m2 ((3) in FIG. 6). The second message m2 may be, for example, a message that the task executor who uses the first terminal 110 wants to receive a guarantee that the task executor has provided the second message m2. Furthermore, the collision generation value c is generated such that a hash value that is the same as the hash value h generated by the chameleon hash using the public key and the first message m1 is output when the collision generation value c is input to the chameleon hash together with the public key and the second message m2. The collision generation value c can be generated using, in one example, the adaption of the chameleon hash. Then, the control unit 301 of the first terminal 110 provides the generated collision generation value c and the second message m2 to the second terminal 120 ((4) in FIG. 6).

When having received the collision generation value c and the second message m2, a control unit 401 of the second terminal 120 transmits a verification request including the received collision generation value c and second message m2 to the server 101 ((5) in FIG. 6).

When having received the collision generation value c and the second message m2, the control unit 201 of the server 101 inputs the collision generation value c and the second message m2 together with the public key cpk of the task executor who uses the first terminal 110 to the chameleon hash and acquires a hash value h '((6) in FIG. 6). Then, the control unit 201 of the server 101 verifies whether the obtained hash value h' matches the hash value h generated by the chameleon hash using the first message m1, the random value r, and the public key cpk in (1) in FIG. 6 ((7) in FIG. 6). Then, in a case where the hash value h' matches the hash value h, it can be certified that the second message m2 has been provided by the task executor having the private key.

When the verification is completed, the control unit 201 of the server 101 notifies the second terminal 120 of the verification result ((8) in FIG. 6). The second terminal 120 can get whether or not the second message m2 has been provided by the task executor who uses the first terminal 110 based on the received verification result.

Note that the example of FIG. 6 describes an example in which the generation of the hash value h' in (6) and the verification in (7) are executed by the server 101, but the embodiment is not limited thereto. For example, in another embodiment, the control unit 401 of the second terminal 120 may execute the generation of the hash value h' in (6) and the verification in (7).

In this case, for example, the second terminal 120 receives the hash value h generated in (1) from the server 101. Furthermore, the second terminal 120 acquires the public key cpk of the task executor. In an example, the second terminal 120 may receive provision of the public key cpk of the task executor from the first terminal 110. Then, the control unit 401 of the second terminal 120 may input the collision generation value c, the second message m2, and the public key cpk to the chameleon hash to acquire the hash value h', and execute verification based on whether or not the hash value h' matches the hash value h received from the server 101. Alternatively, in still another embodiment, when having executed hash value generation processing in (6) to acquire the hash value h', the control unit 401 of the second terminal 120 may transmit the hash value h' to the server 101 and the server 101 may execute the verification in (7).

Note that the message including the first message m1 and the second message m2 described above may be, for example, a document to be edited by the task executor, and may be a document described in extensible markup language (XML) in an example.

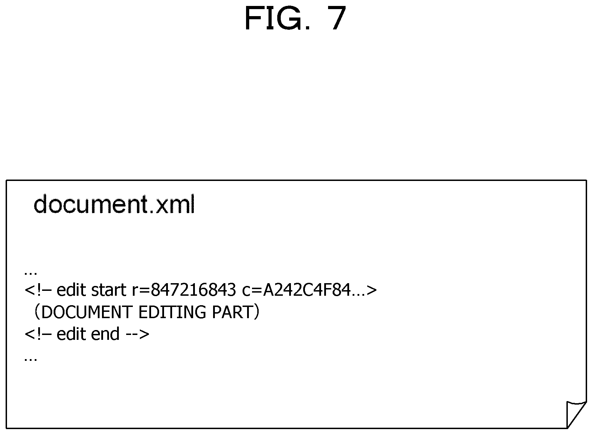

FIG. 7 is a diagram illustrating a message created in XML. FIG. 7 illustrates a document: docment.xml created in XML as a message. The message may include the random value r in an example. Furthermore, in an example, when the collision generation value c is generated using the adaption, the generated collision generation value may be included in the message.

Furthermore, for example, the message may include a program that prompts the task executor to execute processing such as a task. For example, in a case where the first terminal 110 accesses the server 101 via a browser, the message may include a program for displaying, in Javascript (registered trademark), a display screen that prompts the task executor to edit an editing part.

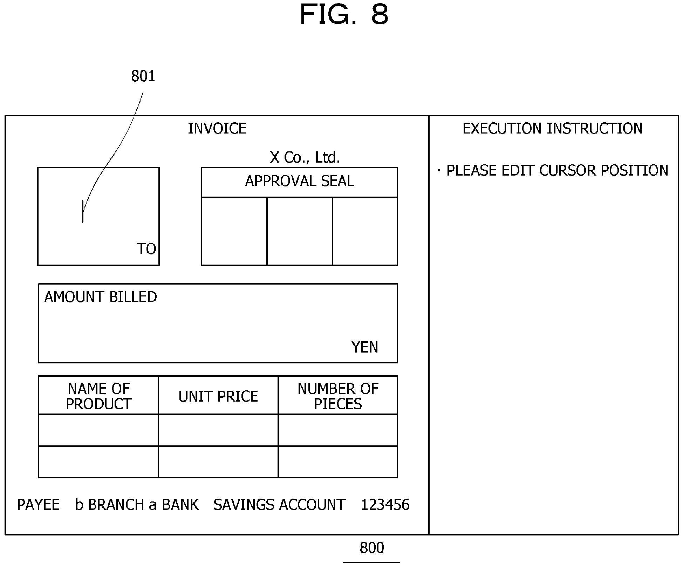

FIG. 8 is an exemplary diagram illustrating a display screen 800 that prompts the task executor to edit an editing part. On the display screen 800 of FIG. 8, an application form to be filled in by the task executor and an execution instruction to instruct filling in the application form are displayed. Then, in the application form, a cursor 801 is displayed at the editing part, and furthermore, instruction content to edit a cursor position is displayed in the execution instruction. For example, it is possible to execute control to designate the editing content, the editing part, and the like for the task executor by a program in Javascript or the like in this manner.

Note that FIGs. 7 and 8 illustrate the examples of controlling editing of the message by the task executor using the program in Javascript executed in the browser, but the embodiment is not limited thereto. In another example, an application for exchanging data of the verification processing with the server 101 may be installed in the terminal 102. Furthermore, the program that executes control to designate the editing content, the editing part, and the like may be described in another language such as Java (registered trademark).

Next, operation flows of processing executed by the server 101, the first terminal 110, and the second terminal 120 in the verification processing according to the embodiment described in FIG. 6 will be described.

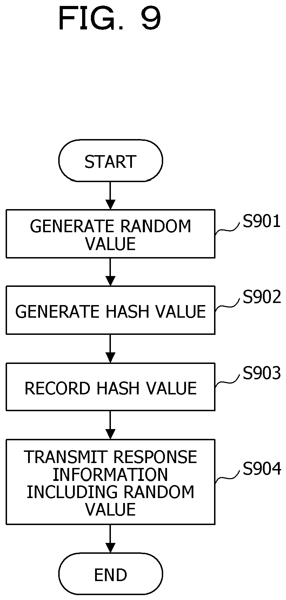

FIG. 9 is a flowchart illustrating an operation flow of processing of accepting a certification request executed by the control unit 201 of the server 101 according to the first embodiment. Note that the operation flow of FIG. 9 may correspond to, for example, the operations of (1) and (2) of FIG. 6. When having received the certification request from the first terminal 110, for example, the control unit 201 of the server 101 starts the operation flow of FIG. 9. Note that, in an example, the certification request may include the public key cpk associated with the task executor who uses the first terminal 110. Furthermore, in another embodiment, the control unit 201 of the server 101 may receive the public key cpk associated with the task executor who uses the first terminal 110 from the first terminal 110 separately from the certification request.

In step 901 (hereinafter, the step is described as "S", and is described as, for example, S901), the control unit 201 of the server 101 generates a random value. The random value may be generated, for example, for each certification request received by the server 101. Furthermore, in another example, a random value common to a plurality of certification requests may be used.

In S902, the control unit 201 of the server 101 generates a hash value corresponding to the certification request based on the generated random value. For example, the control unit 201 may generate the hash value h by the chameleon hash using the random value r, the public key cpk of the task executor, and the first message m1. Note that, for example, arbitrary data such as text of a document can be used as the first message m1, and in an example, the first message m1 may be a template of documents such as an application form and an invoice. The first message m1 may be, for example, data generated by the control unit 201 of the server 101, or may be data provided from the first terminal 110 in another example.

In S903, the control unit 201 of the server 101 stores the generated hash value h in the storage unit 202. Note that the hash value h stored in the storage unit 202 may be associated with, for example, the certification request.

In S904, the control unit 201 of the server 101 generates response information including the random value r generated in S901, and transmits the response information to the first terminal 110 that has notified the certification request, and the present operation flow ends.

According to the operation flow of FIG. 9, the control unit 201 of the server 101 can generate the hash value h using the public key of the task executor who uses the first terminal 110 and who has notified the certification request, and store the hash value h in the storage unit 202, for example. Furthermore, the control unit 201 of the server 101 can notify the first terminal 110 of the random value r corresponding to the certification request, for example.

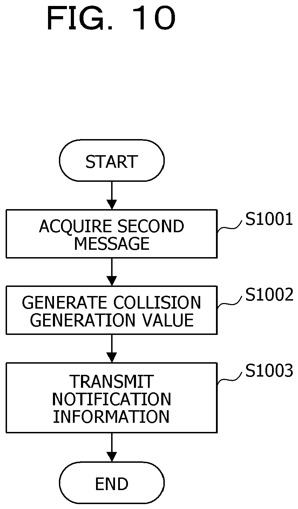

Next, FIG. 10 is a flowchart illustrating an operation flow of processing of transmitting the second message m2 with certification executed by the control unit 301 of the first terminal 110 according to the first embodiment. Note that the operation flow of FIG. 10 may correspond to, for example, the operations of (3) and (4) of FIG. 6. When having received the response information from the server 101, the control unit 301 of the first terminal 110 may start the operation flow of FIG. 10.

In S1001, the control unit 301 of the first terminal 110 acquires the second message m2. Note that the second message m2 may be arbitrary data, and may be data created by the task executor who uses the first terminal 110 and stored in the storage unit 302 of the first terminal 110 in an example. The second message m2 may be, for example, data obtained by the task executor filling information in the template of documents such as an application form and an invoice. Alternatively, the second message m2 may be data obtained by adding a change to the first message m1 in one example, or may be data created independently of the first message m1 in another example.

In S1002, the control unit 301 of the first terminal 110 generates the collision generation value c based on the response information received from the server 101 and the second message m2. The response information may include, for example, the random value r and the first message m1. Then, for example, the control unit 301 may generate the collision generation value c from the random value r, the private key tk of the task executor, the first message m1, and the second message m2 by using the adaption.

In S1003, the control unit 301 of the first terminal 110 transmits, for example, notification information including the collision generation value c and the second message m2 to the second terminal 120, and the present operation flow ends.

By the operation flow of FIG. 10, the control unit 301 of the first terminal 110 can generate the collision generation value c for certifying that the person who has provided the second message m2 is the task executor corresponding to the private key, and transmit the collision generation value c to the second terminal 120 together with the second message m2.

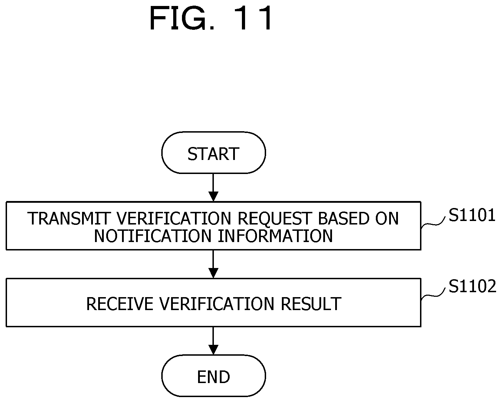

Next, FIG. 11 is a flowchart illustrating an operation flow of verification request processing executed by the control unit 401 of the second terminal 120 according to the first embodiment. Note that the operation flow of FIG. 11 may correspond to, for example, the operations of (5) and (8) of FIG. 6. When having received the notification information from the first terminal 110, the control unit 401 of the second terminal 120 may start the operation flow of FIG. 11.

In S1101, the control unit 401 of the second terminal 120 transmits the verification request to the server 101 based on the notification information. For example, the verification request may include the collision generation value c notified in the response information and the second message m2.

In S1102, the control unit 401 of the second terminal 120 receives the verification result from the server 101, and the present operation flow ends.

According to the operation flow of FIG. 11, the second terminal 120 can transmit, to the server 101, the verification request for requesting verification as to whether the received second message m2 has been provided by the valid task executor who can use the private key tk, and can receive the verification result.

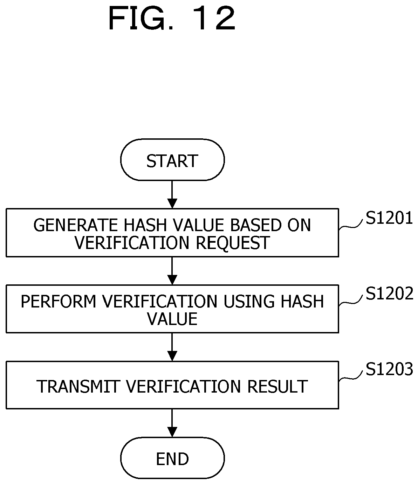

Next, FIG. 12 is a flowchart illustrating an operation flow of processing of transmitting the verification result executed by the control unit 201 of the server 101 according to the first embodiment. Note that the operation flow of FIG. 12 may correspond to, for example, the operations of (6), (7), and (8) of FIG. 6. When having received the verification request from the second terminal 120, the control unit 201 of the server 101 may start the operation flow of FIG. 12.

In S1201, the control unit 201 of the server 101 generates a hash value based on the verification request. For example, the control unit 201 may generate the hash value h' from the second message m2, the collision generation value c, and the public key cpk of the task executor included in the verification request, using the chameleon hash.

In S1202, the control unit 201 of the server 101 performs verification using the hash value h'. For example, the control unit 201 may verify whether the second message m2 has been provided by the task executor having the private key tk based on whether the hash value h stored in the storage unit 202 in the operation flow of FIG. 9 matches the hash value h' generated in S1201.

As described above, for example, determining the collision generation value c such that the same hash value as that of the original message is output in the case where the message to be input to the chameleon hash is changed can be made only by the task executor having the private key corresponding to the public key. Therefore, for example, it is assumed that the hash value h' obtained by inputting the second message m2 and the collision generation value c to the chameleon hash is equal to the hash value h obtained by inputting the original first message m1 and the random value r. In this case, it can be certified that the second message m2 has been provided by the task executor having the private key.

### (Second Embodiment)

Next, a second embodiment will be described. A private key is generally treated carefully so that a third party cannot use it without permission. In the above-described first embodiment, since the private key is used to generate the collision generation value c, it can be regarded that the task executor has provided the second message by verifying the matching of the hash values. However, for example, the private key may be leaked. Therefore, it is favorable to further enhance security.

In the second embodiment, a server 101 executes person authentication, and generates a hash value, using a value generated for a task executor who has undergone the person authentication. Thereby, after the person authentication is performed, it can be guaranteed that the authenticated task executor has generated a collision generation value c, using a second message m2. As a result, it is possible to certify with higher security that the second message m2 has been provided by the task executor.

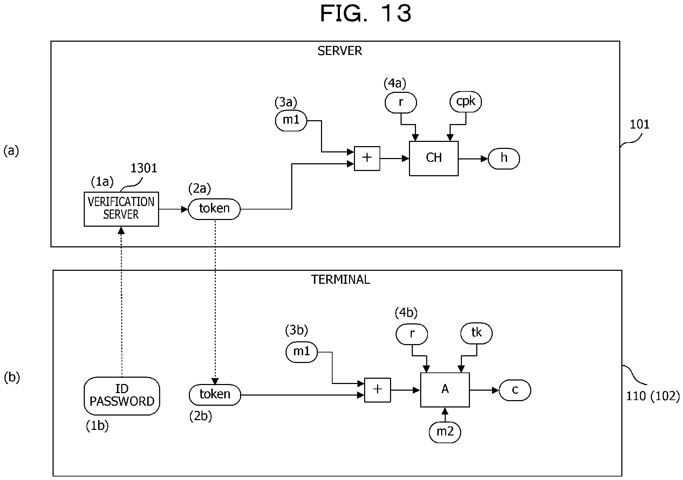

FIG. 13 is a diagram illustrating person authentication and generation of a hash value and a collision generation value according to the second embodiment. As illustrated in FIG. 13, in the server 101, a control unit 201 may operate an authentication server 1301. The authentication server 1301 is an example of the above-described authentication unit 212. For example, the authentication server 1301 may perform the person authentication by asking the task executor who uses a first terminal 110 to input an ID (identifier) and a password. When the authentication server 1301 succeeds in the person authentication, the control unit 201 of the server 101 may issue a token to the first terminal 110. The token is, for example, a session ID. Various web services use a method of causing a browser to record a value of a token when the authentication is successful, and regarding an access source as a person whose authentication is successful in a case of having the value of the token. Then, the second embodiment forces a task executor authentication process by using the value of the token issued after authentication for generation of a hash value and a collision generation value.

For example, FIG. 13(a) illustrates generation of a hash value by the server 101. The control unit 201 of the server 101 receives the ID and password of the task executor from the first terminal 110 and executes authentication in the authentication server 1301 ((1a) in FIG. 13). When the authentication of the task executor who uses the first terminal 110 is successful, the control unit 201 of the server 101 issues the token for the first terminal 110 and transmits the token to the first terminal 110 ((2a) in FIG. 13). Then, the control unit 201 of the server 101 uses the token issued to the first terminal 110 to generate a hash value h. For example, the control unit 201 of the server 101 executes a combination operation of the value of the token and a first message m1 to generate a combined value ((3a) in FIG. 13). The combination operation may be, for example, character string combination of the token and the first message m1, or two pieces of data may be combined by another algorithm. Then, the control unit 201 of the server 101 may acquire the hash value h by applying the generated combined value, a random value r, and a public key cpk of the task executor to a chameleon hash.

Furthermore, FIG. 13(b) illustrates generation of the collision generation value c by the first terminal 110. The control unit 301 of the first terminal 110 transmits the ID and password of the task executor to the authentication server 1301 of the server 101 and authenticate the task executor ((1b) in FIG. 13). When the authentication of the task executor is successful, the control unit 301 of the first terminal 110 receives the token from the server 101 ((2b) in FIG. 13). Then, the control unit 301 of the first terminal 110 executes the combination operation of the received token and the first message m1 to generate a combined value, similarly to the operation executed by the server 101 in (3a) ((3b) in FIG. 13). Then, the control unit 301 of the first terminal 110 may acquire the collision generation value c by applying the generated combined value, the random value r, a private key tk of the task executor, and a new second message m2 to be certified by the server 101 to adaption.

As described above, by using the token issued after user authentication for the generation of the hash value and the generation of the collision generation value, for example, the terminal 102 that does not hold the token cannot generate the correct collision generation value c. Therefore, for example, it is assumed that the hash value h' obtained by inputting the collision generation value c and the second message m2 to the chameleon hash matches the hash value h generated by the server 101 in (4a) in FIG. 13. In this case, it can be guaranteed that the task executor authenticated in the person authentication has generated the collision generation value c, using the second message m2.

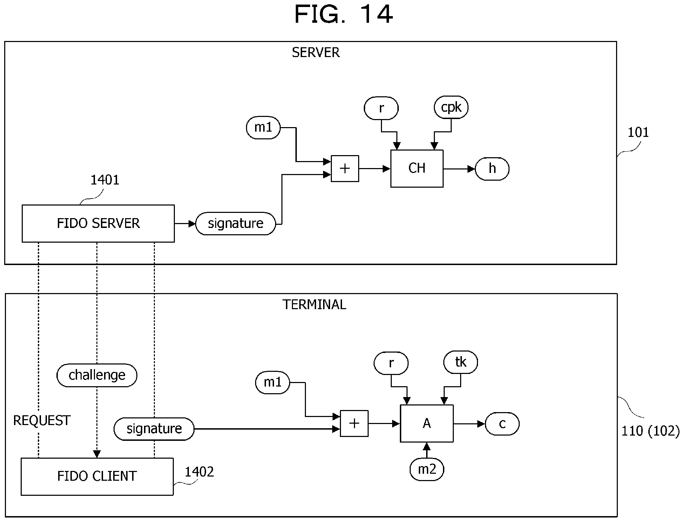

Furthermore, FIG. 14 is a diagram illustrating another example of the person authentication and the generation of the hash value and the collision generation value according to the second embodiment. FIG. 14 illustrates a case of applying a mechanism of biometric authentication by fast identity online (FIDO) as an authentication function. As illustrated in FIG. 14, in FIDO, the control unit 201 of the server 101 operates a FIDO server 1401, and furthermore, the control unit 301 of the first terminal 110 operates a FIDO client 1402. The FIDO server 1401 is an example of the above-described authentication unit 212. Furthermore, the FIDO client 1402 is an example of the above-described authentication unit 313. Then, the FIDO client 1402 gives a signature to a challenge value (challenge) transmitted from the FIDO server 1401 to the FIDO client 1402 at the time of authentication, using a FIDO private key in the FIDO client 1402. The FIDO client 1402 returns a value (signature) of the signature to the FIDO server 1401. The FIDO server 1401 decrypts the signature using a FIDO public key received from the FIDO client 1402 in advance, and the authentication is successful when a value obtained by the decryption matches the challenge value created by the FIDO server 1401.

Then, in another example of the second embodiment, the value of the signature exchanged between the FIDO server 1401 and the FIDO client 1402 is used to generate the hash value and the collision generation value. For example, when the FIDO authentication is successful, the control unit 201 of the server 101 performs the combination operation of the signature received from the FIDO client 1402 and the first message m1. Then, the control unit 201 of the server 101 may acquire the hash value h by applying the obtained combined value, the random value r, and the public key cpk of the task executor to the chameleon hash.

Furthermore, the control unit 301 of the first terminal 110 performs the combination operation of the signature generated by the FIDO client 1402 and the first message m1 to acquire the combined value when the authentication is successful. Then, the control unit 301 of the first terminal 110 generates the collision generation value c by applying the acquired combined value, the random value r, the private key tk, and the second message m2 to the adaption. As described above, by using the signature exchanged in FIDO for the generation of the hash value and the generation of the collision generation value, it is possible to verify that the authenticated task executor has generated the collision generation value using the second message m2 after the person authentication is performed.

Note that the value available in the second embodiment is not limited to the token and the signature described above, and for example, other values obtained as a result of authentication may be used.

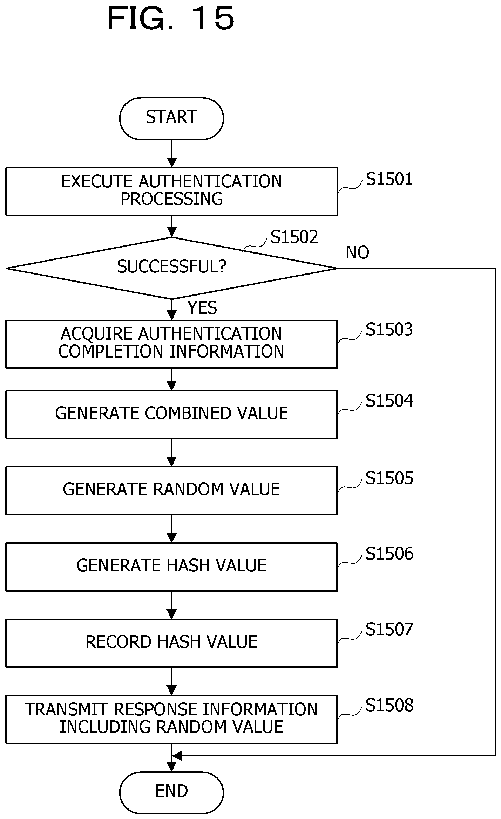

FIG. 15 is a flowchart illustrating an operation flow of processing of accepting a certification request executed by the server 101 according to the second embodiment. For example, when having received the certification request from the first terminal 110, the control unit 201 of the server 101 may start the operation flow of FIG. 15.

In S1501, the control unit 201 of the server 101 executes the authentication processing. For example, the control unit 201 may perform authentication by receiving the password and ID of the task executor from the first terminal 110, may execute authentication by FIDO, or may execute authentication by another method.

In S1502, the control unit 201 of the server 101 determines whether or not the authentication is successful. In a case where the authentication fails (NO in S1502), the present operation flow ends. On the other hand, in a case where the authentication is successful (YES in S1502), the flow proceeds to S1503.

In S1503, the control unit 201 acquires authentication completion information. The authentication completion information may be, for example, information indicating that the authentication of the task executor is completed. In an example, the token and the signature described above, for example, can be used, and various values can be used according to the authentication method.

In S1504, the control unit 201 generates the combined value. For example, the control unit 201 executes the combination operation of the authentication completion information and the first message m1 to generate the combined value.

Subsequent processing of S1505 to S1508 corresponds to, for example, the processing of S901 to S904, and the control unit 201 of the server 101 may execute processing similar to the processing of S901 to S904. Note that, in the operation flow of FIG. 15, when the hash value is generated in S1506, the combined value generated using the authentication completion information may be used instead of the first message m1.

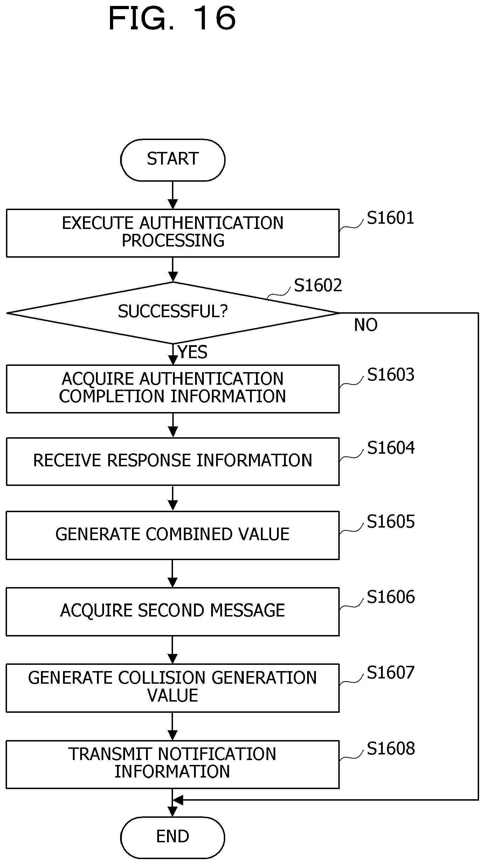

FIG. 16 is a flowchart illustrating an operation flow of processing of transmitting notification information with certification executed by the control unit 301 of the first terminal 110 according to the second embodiment. When an authentication start instruction is input, the control unit 201 of the first terminal 110 may start the operation flow of FIG. 16.

In S1601, the control unit 301 executes, for example, the authentication processing. For example, the control unit 301 may perform the authentication by transmitting the password and ID of the task executor to the server 101, may execute the authentication by FIDO, or may execute the authentication by another method.

In S1602, the control unit 301 determines whether or not the authentication is successful. In a case where the authentication fails (NO in S1602), the present operation flow ends. On the other hand, in a case where the authentication is successful (YES in S1602), the flow proceeds to S1603.

In S1603, the control unit 301 acquires authentication completion information. The authentication completion information may be, for example, information indicating that the authentication of the task executor is completed. In an example, the token and the signature described above, for example, can be used, and various values can be used according to the authentication method.

In S1604, the control unit 301 receives the response information including the random value r from the server 101.

In S1605, the control unit 301 generates the combined value. For example, the control unit 201 executes the combination operation of the authentication completion information and the first message m1 to generate the combined value.

Subsequent processing of S1606 to S1608 corresponds to, for example, the processing of S1001 to S1003, and the control unit 301 of the first terminal 110 may execute processing similar to the processing of S1001 to S1003. Note that, in the operation flow of FIG. 16, when the collision generation value is generated in S1607, the combined value generated using the authentication completion information may be used instead of the first message m1.

Then, as illustrated in the operation flows of FIGs. 15 and 16, it is possible to force the task executor to perform the authentication processing by generating the hash value and the collision generation value, using the authentication completion information indicating that the authentication is completed. Furthermore, it is possible to guarantee that the task executor whose person authentication has been performed has generated the collision generation value by using the second message m2, by generating the hash value and the collision generation value, using the authentication completion information acquired according to the result of the authentication.

Therefore, according to the second embodiment, it is possible to certify that the second message m2 has been provided by the task executor with high security.

### (Third Embodiment)

Next, a third embodiment will be described. For example, there is a case where it is desired to cause a task executor who uses a first terminal 110 to execute predetermined processing such as a task and to guarantee that the processing has been executed. As an example, there is a situation where it is desired to cause the task executor to execute processing such as clicking an approval button on a screen for approval of an application or the like, and then to certify that the processing such as clicking the approval button has been reliably executed. In this case, it is conceivable to add, to a program, an operation code for executing an operation for certifying execution of a code targeted for execution certification that is a target to be guaranteed that the target has been executed in the program, in association with the code targeted for execution certification. Note that, hereinafter, the operation code for executing an operation for certifying execution of the code targeted for execution certification is sometimes referred to as an execution certification operation code. Hereinafter, addition of the execution certification operation code to the program will be described.

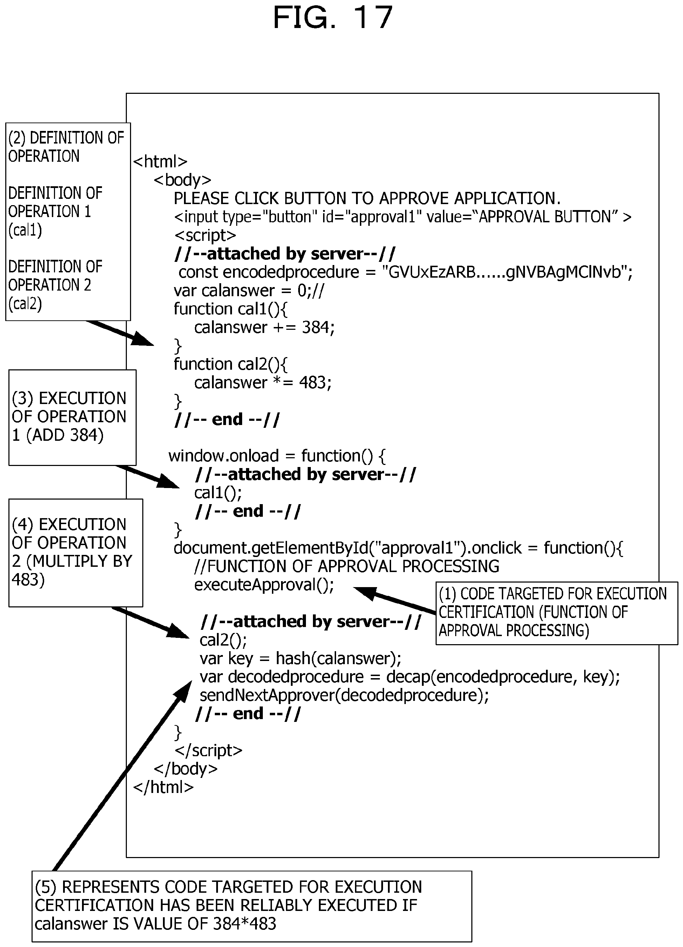

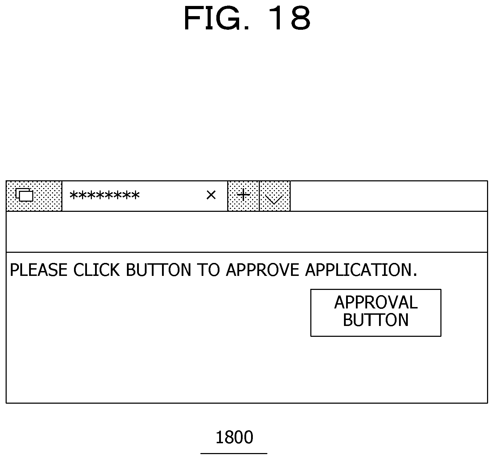

FIG. 17 is a diagram illustrating addition of the execution certification operation code to a program according to the third embodiment. FIG. 17 illustrates a program for approval created with Javascript as an example. When the program in FIG. 17 is executed, for example, a window 1800 in FIG. 18 is displayed on a browser, and an approver can input the will of approval by pressing an approval button. Then, it is assumed that the code targeted for execution certification desired to cause the task executor to reliably execute is executeApproval(), which is executed after the approval button is pressed ((1) in FIG. 17).

In this case, a control unit 201 of a server 101 generates a challenge value for the program including the code targeted for execution certification, for example. The challenge value can be acquired from, for example, a function that outputs a different result each time the function is executed. A random function, a shuffle function, or the like can be used as an example of the function that outputs a different result for each execution. The challenge value may be a random number in an example.

Then, the control unit 201 generates the execution certification operation code, using the challenge value, and adds the execution certification operation code to the program to generate a processing program. Therefore, the processing program includes, for example, a code corresponding to predetermined processing such as a task and the execution certification operation code. For example, in FIG. 17, the code from "//--attached by server--//" to "//--end--//" represent the code added to the program by the control unit 201. The execution certification operation code is a code for executing an operation for certifying execution of the code targeted for execution certification, for example.

In an example, the control unit 201 specifies a position of the code targeted for execution certification that satisfies a predetermined condition in the program, and adds the execution certification operation code to the program according to the specified position of the code targeted for execution certification to generate the processing program. In an example, the control unit 201 may add the execution certification operation code to a position of a mark that indicates the position of the code targeted for execution certification in place of the mark. Note that deletion of the mark can make it difficult to specify where in the program the code targeted for execution certification is located and can improve security.

For example, in FIG. 17, at the beginning of the program, a program that defines operation content of operation 1 and operation 2 is described as the execution certification operation code ((2) in FIG. 17). In the example in FIG. 17, an operation code for adding 384 to a variable: calanswer is described as the operation 1: cal1. Furthermore, an operation code for multiplying the variable: calanswer by 483 is described as the operation 2: cal2. Note that the numerical value: 384 used for the operation 1: call and the numerical value: 483 used for the operation 2: cal2 are both challenge values.

Furthermore, in the program in FIG. 17, the function for the approval processing: executeApproval(); is indicated as the code targeted for execution certification ((1) in FIG. 17). Then, as the execution certification operation code, the operation code that executes the operation 1: cal1 and the operation code that executes the operation 2: cal2 are added so as to sandwich the code targeted for execution certification ((3) and (4) in FIG. 17). In this case, when the program is executed in the order of the operation code for the operation 1 → the code targeted for execution certification → the operation code for the operation 2 in the execution of the program, it is assumed that a correct operation result to be used to generate a combined value described below is obtained.

For example, in the program in FIG. 17, the value of the variable: calanswer used to acquire the operation result is initialized to zero first. Thereafter, 384 is added in the execution of the operation 1: cal1, and the calanswer becomes 384. Next, when the operation 2 is executed after the execution of the code targeted for execution certification, 483 is multiplied to give calanswer = 384 × 483 = 185472, and the operation result: 185472 is obtained. Note that, for example, when the operations 1 and 2 are not executed, only one of the operations 1 and 2 is executed, or the operations 1 and 2 are executed in a different order such as the operation 2 → the operation 1 in the execution of the program, the value of calanswer as the operation result does not become 185472. Therefore, if the value of calanswer as the operation result after executing the program is 185472, it is possible to certify that the code targeted for execution certification has been executed ((5) in FIG. 17).

For example, as described above, the execution certification operation code may be added to the program so as to sandwich the code targeted for execution certification in the program. In other words, for example, the control unit 201 may add the execution certification operation code to the program so as to add an anterior operation code before the position of the code targeted for execution certification and add a posterior operation code after the position of the code targeted for execution certification. Furthermore, the operation result used to generate the combined value described below may be obtained in a case where operation of the posterior operation code is executed using a primary operation result obtained by execution of the anterior operation code, for example.

Note that the addition of the execution certification operation code to the program is not limited to the above-described example. For example, the execution certification operation code may be added to the program by another format in which the operation result that verification is successful is obtained in the case where the code targeted for execution certification is executed, whereas the operation result that verification is successful cannot obtained in the case where the code targeted for execution certification is not executed.

As another example, the execution certification operation code may be added to the program so as to execute the operation using a return value of a function included in the code targeted for execution certification. In this case, the return value can be obtained when the code targeted for execution certification is executed but the return value cannot be obtained when the code targeted for execution certification is not executed in the execution of the program. Therefore, the operation result can be made different depending on whether or the code targeted for execution certification is executed.

Furthermore, in the above-described embodiment, the example of certifying execution of one code targeted for execution certification by adding the execution certification operation code to the program has been described. However, the embodiment is not limited thereto. In another embodiment, the execution certification operation code may be further added to another portion of the program in order to guarantee that a plurality of codes included in the program has been executed in a predetermined order.

Then, in the third embodiment, the value of the operation result: calanswer of the above-described execution certification operation code is used to generate the hash value in the server 101 and to generate the collision generation value c in the terminal 102. Accordingly, it is possible to certify that the code targeted for execution certification has been executed when the hash value h generated by the server 101 matches the hash value h' generated for verification of the second message m2 at the time of verification by comparison of hash values.

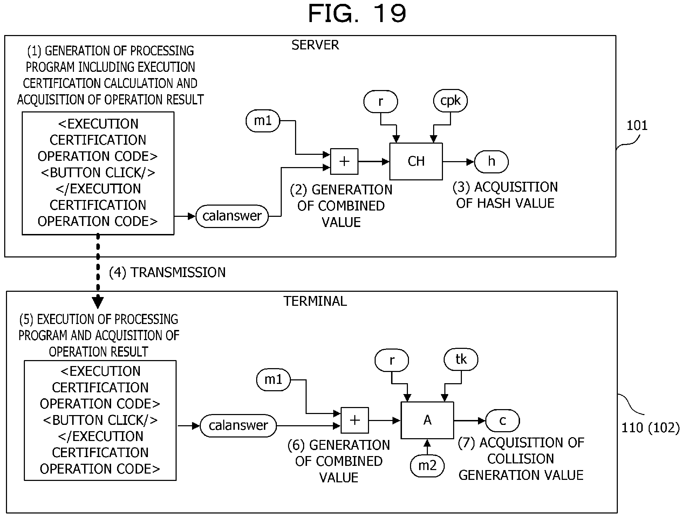

FIG. 19 is a diagram illustrating an example of generation of the hash value and the collision generation value, using the operation result of the execution certification operation code according to the third embodiment. As illustrated in FIG. 19, for example, the control unit 201 of the server 101 adds the execution certification operation code to the program including the code targeted for execution certification to generate the processing program, and furthermore, acquires the operation result: calanswer of the code targeted for execution certification ((1) in FIG. 19). Then, for example, the control unit 201 of the server 101 executes the combination operation of the obtained value of the operation result: calanswer and the value of the first message m1 to acquire the combined value ((2) in FIG. 19). The control unit 201 of the server 101 generates the hash value h from the obtained combined value, the random value r, and the public key cpk ((3) in FIG. 19). Furthermore, the control unit 201 of the server 101 transmits the processing program generated by adding the execution certification operation code to the first terminal 110 ((4) in FIG. 19).

Meanwhile, in the first terminal 110, for example, when having received the processing program, the control unit 301 executes the processing program ((5) in FIG. 19). Note that, in the execution of the processing program, the task executor who uses the first terminal 110 may execute, for example, a predetermined task such as pressing down the approval button to input the will of approval. Then, when the processing program is executed, the control unit 301 of the first terminal 110 combines the value of the operation result: calanswer obtained by executing the processing program and the value of the first message m1 to acquire the combined value ((6) in FIG. 19). The control unit 301 of the first terminal 110 generates the collision generation value c from the obtained combined value, the random value r, the private key tk, and the second message m2 ((7) in FIG. 19).

Then, for example, when performing verification, the control unit 201 of the server 101 confirms whether the hash value h' obtained from the collision generation value c and the second message m2 matches the hash value h generated by the server 101 in (3) in FIG. 19. Thereby, it can be certified that the second message m2 has been provided by the task executor having the private key tk.

Furthermore, the execution certification operation code in the processing program is added so as to output an assumed correct value of calanswer in the case where the code targeted for execution certification is executed. In other words, for example, in the case where the code targeted for execution certification is not executed in the first terminal 110, the value of calanswer becomes a value different from the assumed correct value. In other words, in this case, the combined value generated in (6) in FIG. 19 becomes a value different from the combined value generated by the server 101 in (2) in FIG. 19. As a result, the first terminal 110 cannot generate the collision generation value c for generating the hash value that collides with the hash value h generated in (3) in FIG. 19. Therefore, for example, it is assumed that the hash value h' obtained from the collision generation value c generated using the calanswer and the second message m2 matches the hash value h generated by the server 101 in (3) in FIG. 19. In this case, it can be certified that the code targeted for execution certification has been executed.

### (Fourth Embodiment)

Next, a fourth embodiment will be described. For example, there are some cases where a plurality of tasks is coupled to form one task flow. In such cases, for example, the embodiments can be used to guarantee that the series of tasks has been performed in the right order.

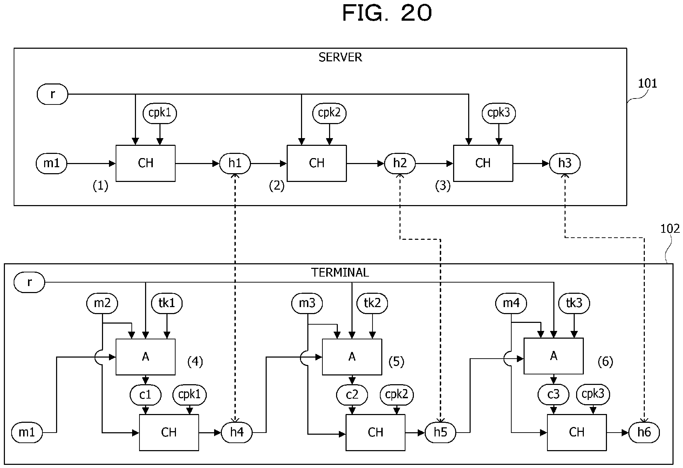

FIG. 20 is a diagram for describing execution certification of each process of a task flow according to the fourth embodiment. Note that FIG. 20 assumes a case where the task flow includes three tasks of process 1, process 2, and process 3. Then, for example, it is assumed that a control unit 301 of a terminal 102 may create a pair of a public key and a private key of a chameleon hash for each task process, and the public key of the chameleon hash corresponding to each task process is provided from the terminal 102 to a server 101. For example, in the example in FIG. 20, cpk1, cpk2, and cpk3 are illustrated as the respective public keys corresponding to the process 1, process 2, and process 3. Note that, in another example, a pair of the public key and the private key common to the plurality of processes may be used.

Here, as an example, a document to be edited in the task is set as a first message m1. In this case, as illustrated in FIG. 20, the control unit 201 of the server 101 first generates a first hash value h1 from the first message m1, a random value r, and the public key cpk1 ((1) in FIG. 20). Then, in the next process 2, the control unit 201 of the server 101 generates a second hash value h2, using the obtained first hash value h1 as an input message of the chameleon hash ((2) in FIG. 20). Similarly, in the process 3, the control unit 201 of the server 101 generates a third hash value h3, using the obtained second hash value h2 as the input message of the chameleon hash ((3) in FIG. 20).

Furthermore, in the example of FIG. 20, tk1, tk2, and tk3 are illustrated as the respective private keys corresponding to the process 1, process 2, and process 3. Furthermore, for example, the document to be edited is set as the first message m1, and editing results in the respective task processes to the first message m1 are set as a second message m2, a third message m3, and a fourth message m4. In this case, as illustrated in FIG. 20, the terminal 102 generates a first collision generation value c1 by adaption from the first message m1, the second message m2, the random value r, and the private key tk1. Next, the terminal 102 generates a fourth hash value h4 by the chameleon hash from the obtained first collision generation value c1, the public key cpk1, and the second message m2 ((4) in FIG. 20).

Then, in the next process 2, the terminal 102 generates a second collision generation value c2, using the obtained fourth hash value h4 as an original message in the adaption. The terminal 102 generates a fifth hash value h5 by the chameleon hash from the obtained second collision generation value c2, the public key cpk2, and the third message m3 ((5) in FIG. 20). For the process 3, the terminal 102 can similarly repeat the processing to generate a third collision generation value c3, using the fifth hash value h5 and the fourth message m4, and generate a sixth hash value h6, using the third collision generation value c3.

Then, for example, when the third hash value h3 acquired by the server 101 matches the sixth hash value h6 obtained by the terminal 102, it is possible to certify that each process has been executed in the right order.

Furthermore, for example, if one of the previous tasks has not been performed correctly, the last hash value does not match. Therefore, according to the fourth embodiment, it is possible to detect that each process has not been executed in the right order. Furthermore, for example, in the case where the last hash value does not match, it is possible to specify up to which task process has been correctly performed by checking up to which value of the hash values (for example, h1 and h2) corresponding to the upstream processes in the task flow has matched. Therefore, the embodiment can also be used for verification of execution of each process in a supply chain or the like.

Note that FIG. 20 illustrates an example in which the hash value of each process is generated by one terminal 102, but the embodiment is not limited thereto. For example, each task process may be executed by one terminal 102, or separate task processes may be executed by a plurality of terminals 102. Also in this case, if the execution order of the task process is not executed as assumed, the hash value does not match, so that it is possible to force the processes to be executed in the right order.

Furthermore, for example, it is assumed that the terminal 102 used by a third party is guaranteed that the second message m2 to the fourth message m4 corresponding to the respective processes have been provided by the task executor having the private key. In this case, the collision generation value c (for example, c1 to c3) generated in each process and the message m (for example, the second message m2 to the fourth message m4) are provided to the terminal 102 used by the third party. As a result, the terminal 102 used by the third party can verify the task executor who has provided the messages. As described above, in an example, the processing of FIG. 20 may include the processing executed by the control unit 301 of the first terminal 110 and the processing executed by a control unit 401 of a second terminal 120.

As described above, it is possible to force the execution of all the tasks and the execution order thereof by connecting the calculation of the chameleon hash with a chain for each task process of the task flow.

Note that, as described with reference to FIGs. 7 and 8, for example, the processing executed in each process can be designated for the task executor by creating the program with Javascript or the like.

### (Fifth Embodiment)

In the above-described embodiments, the example where the collision generation value c is transmitted to the second terminal 120 that executes verification and the verification is executed has been described, but the embodiments are not limited thereto. For example, in another embodiment, a hash value h' generated using a collision generation value c may be transmitted instead of the collision generation value c and verification may be executed.

As an example, software or hardware of a first terminal 110 is constructed such that a random value r generated by a server 101 can be grasped only in a module that performs calculation of adaption. Accordingly, it is possible to verify a task executor that has provided a second message m2 even if the first terminal 110 notifies a second terminal 120 of the hash value h'.

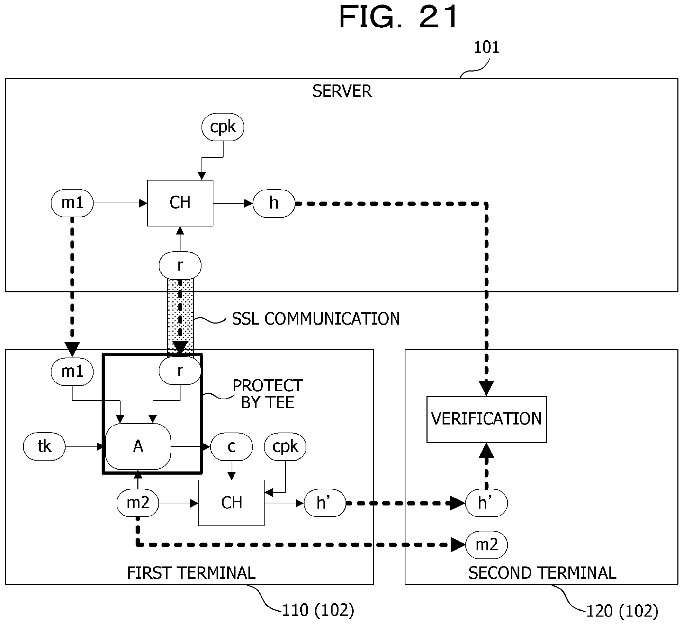

FIG. 21 is a diagram illustrating a case of using a hash value h' based on a collision generation value for verification according to a fifth embodiment. As illustrated in FIG 21, for example, the module of adaption of the first terminal 110 receives the random value r from the server 101 by means of secure sockets layer (SSL) communication directly from inside of the module. Then, the first terminal 110 is constructed such that the random value r is invisible from an outside of the module of the adaption by trusted execution environment (TEE) or the like. For example, by constructing a verification system 100 in this manner, the hash value h' cannot be obtained without passing through the module of the adaption of the first terminal 110. In other words, for example, in a case where the terminal 102 can generate the hash value h' that matches the hash value h generated by the server 101, it is possible to guarantee that the second message m2 has been provided by the task executor having a private key.

For example, a control unit 301 of the first terminal 110 provides the obtained hash value h' and the second message m2 to the second terminal 120. Then, a control unit 401 of the second terminal 120 verifies whether the hash value h' matches the hash value h generated by the server 101, and can determine that the second message m2 has been provided by the task executor having the private key in a case where the hash value h' matches the hash value h.

Furthermore, as another example in which the hash value h' generated using the collision generation value c can be used for verification, there is a case where an editor himself/herself of a document checks whether his/her work has been performed as assumed in the server 101. As an example, there is exemplified a case where, for example, when the editor detects an error of his/her own work by seeing that h' does not match h in a case of editing a portion of the document other than the portion assumed in the server 101. In such a case, since the purpose is to check his/her own work, the possibility of cheating calculation of the verification is low, and the hash value h' can be used for the verification instead of the collision generation value c.

Although the embodiments have been described above, the embodiments are not limited thereto. For example, the above-described operation flows are exemplary, and the embodiments are not limited thereto. If possible, the operation flows may be executed by changing the order of processing or may additionally include further processing, or part of processing may be omitted. For example, the processing of S902 and S903 may be omitted in the operation flow of FIG. 9, and instead, the hash value h based on the first message and the hash value h' based on the collision generation value may be generated in S1202 of FIG. 12.

Furthermore, FIG. 2 described above illustrates the example in which the verification unit 211 is included in the control unit 201 of the server 101, but the embodiment is not limited thereto, and the verification unit 211 or a part of the function thereof may be included in the control unit 401 of the second terminal 120.

Furthermore, the above-described embodiments may be executed in an appropriate combination. For example, the combined value may be obtained by performing a combination operation of the first message m1, the authentication completion information such as a token or a signature, and the operation result of the execution certification operation code, by using the above-described second embodiment and third embodiment in combination.

Furthermore, in the above-described embodiments, the description has been given using the hash value as an example of the value to be used for verification, but the embodiments are not limited thereto, and a value generated by another algorithm may be used for verification.

Moreover, in the above-described embodiments, a digital signature technique or the like may be used in combination in order to further improve the reliability of the document data itself.

Note that, in the above-described embodiments, for example, the control unit 301 of the first terminal 110 operates as the generation unit 311 in the processing of S1002. Furthermore, for example, the control unit 301 of the first terminal 110 operates as the transmission unit 312 in the processing of S1003. For example, the control unit 201 of the server 101 operates as the verification unit 211 in the processes of S1201 to S1203. For example, the control unit 301 of the first terminal 110 operates as the authentication unit 313 in the processes of S1601 to S1603.

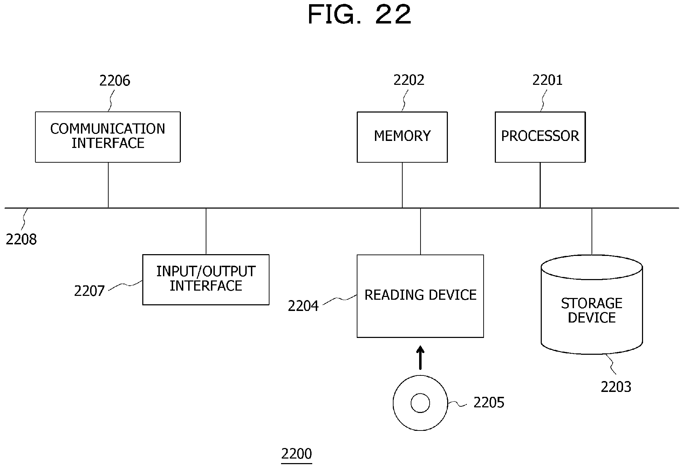

FIG. 22 is a diagram illustrating a hardware configuration of a computer 2200 such as an information processing device for implementing the server 101 and the terminal 102 according to the embodiments. The hardware configuration for implementing the computer 2200 in FIG. 22 includes, for example, a processor 2201, a memory 2202, a storage device 2203, a reading device 2204, a communication interface 2206, and an input/output interface 2207. Note that the processor 2201, the memory 2202, the storage device 2203, the reading device 2204, the communication interface 2206, and the input/output interface 2207 are coupled to each other via a bus 2208, for example.

The processor 2201 may be, for example, a single processor, a multiprocessor, or a multicore processor. The processor 2201 provides some or all of the functions of the above-described control unit 201, control unit 301, or control unit 401, for example, by executing a program that describes procedures of the above-described operation flows using the memory 2202. For example, the processor 2201 of the server 101 operates as the verification unit 211 or operates as the authentication unit 212 in some embodiments by reading and executing a program stored in the storage device 2203. The processor 2201 of the terminal 102 that operates as the first terminal 110 may operate as the generation unit 311, the transmission unit 312, and the authentication unit 313, for example, by reading and executing a program stored in the storage device 2203.

The memory 2202 is, for example, a semiconductor memory, and may include a RAM area and a ROM area. The storage device 2203 is, for example, a semiconductor memory such as a hard disk or a flash memory, or an external storage device. Note that the RAM is an abbreviation for random access memory. Furthermore, the ROM is an abbreviation for read only memory.

The reading device 2204 accesses a removable storage medium 2205 in accordance with an instruction from the processor 2201. The removable storage medium 2205 is implemented by, for example, a semiconductor device, a medium to and from which information is input and output by magnetic action, a medium to and from which information is input and output by optical action, or the like. Note that the semiconductor device is, for example, a universal serial bus (USB) memory. Furthermore, the medium to and from which information is input and output by magnetic action is, for example, a magnetic disk. The medium to and from which information is input and output by optical action is, for example, a CD-ROM, a DVD, or a Blu-ray disc (Blu-ray is a registered trademark), or the like. The CD is an abbreviation for compact disc. The DVD is an abbreviation for digital versatile disk.

The storage unit 202, the storage unit 302, and the storage unit 402 described above may include, for example, the memory 2202, the storage device 2203, and the removable storage medium 2205. For example, the storage device 2203 of the server 101 may store a public key, a random value, a message, a hash value, and the like of the task executor. For example, the storage device 2203 of the terminal 102 that operates as the first terminal 110 may store a private key, a random value, a message, a collision generation value, and the like. For example, the storage device 2203 of the terminal 102 that operates as the second terminal 120 may store a message, a collision generation value, a verification result, and the like.

The communication interface 2206 communicates with another device in accordance with an instruction from the processor 2201. In one example, the communication interface 2206 may transmit and receive data to and from another device via wired or wireless communication. For example, the server 101 may communicate with the terminal 102 via the communication interface 2206. Furthermore, the terminal 102 may communicate with the server 101 and the another terminal 102 via the communication interface 2206, for example. The above-described communication unit 203, communication unit 303, and communication unit 403 are examples of the communication interface 2206.

The input/output interface 2207 may be, for example, an interface between an input device and an output device. The input device is, for example, a device that receives an instruction from the user, such as a keyboard, a mouse, or a touch panel. The output device is, for example, a display device such as a display, or an audio device such as a speaker.

Each program according to the embodiments is provided to the server 101 and the terminal 102 in the following forms, for example.

Installed on the storage device 2203 in advance.

(2) Provided by the removable storage medium 2205.

(3) Provided from a server such as a program server.

Note that the hardware configuration of the computer 2200 for implementing the server 101 and the terminal 102 described with reference to FIG. 22 is exemplary, and the embodiment is not limited thereto. For example, a part of the above-described configuration may be removed, or a new configuration may be added. Furthermore, in another embodiment, for example, some or all of the functions of the above-described control unit 201, control unit 301, and control unit 401 may be implemented as hardware including FPGA, SoC, ASIC, PLD, or the like. Note that the FPGA is an abbreviation for field programmable gate array. The SoC is an abbreviation for system-on-a-chip. The ASIC is an abbreviation for application specific integrated circuit. The PLD is an abbreviation for programmable logic device.

Several embodiments have been described above. However, the embodiments are not limited to the above-described embodiments, and it should be understood that the embodiments include various modifications and alternatives of the above-described embodiments. For example, it would be understood that various embodiments may be embodied by modifying configuration elements without departing from the spirit and scope of the embodiments. Furthermore, it would be understood that various embodiments may be implemented by appropriately combining a plurality of configuration elements disclosed in the above-described embodiments. Moreover, a person skilled in the art would understand that various embodiments may be implemented by removing some configuration elements from all the configuration elements given in the embodiments or by adding some configuration elements to the configuration elements given in the embodiments.

### CITATION LIST

### PATENT DOCUMENT

Patent Document 1: Japanese Laid-open Patent Publication No. 2004-228916
Patent Document 2: International Publication Pamphlet No. WO 2020/067376

### REFERENCE SIGNS LIST

- 100: Verification system
- 101: Server
- 102: Terminal
- 105: Network
- 110: First terminal
- 120: Second terminal
- 201: Control unit
- 202: Storage unit
- 203: Communication unit
- 211: Verification unit
- 212: Authentication unit
- 301: Control unit
- 302: Storage unit
- 303: Communication unit
- 311: Generation unit
- 312: Transmission unit
- 313: Authentication unit
- 401: Control unit
- 402: Storage unit
- 403: Communication unit
- 1301: Authentication server
- 1401: FIDO server
- 1402: FIDO client
- 2200: Computer
- 2201: Processor
- 2202: Memory
- 2203: Storage device
- 2204: Reading device
- 2205: Removable storage medium
- 2206: Communication interface
- 2207: Input/output interface
- 2208: Bus

## Claims

1. A verification system comprising:
a server configured to generate a hash value according to a first algorithm by using a public key associated with a user and a first message; and
a terminal that includes
a generation unit configured to generate a collision generation value by a second algorithm based on the first message, a second message, and a private key that is paired with the public key so that the hash value is generated in a case where the collision generation value is input to the first algorithm together with the public key and the second message, and
a transmission unit configured to transmit the collision generation value and the second message to another terminal that is to be guaranteed that the second message has been provided by the user.

2. The verification system according to claim 1, wherein the server further includes a verification unit configured to output a verification result that indicates that the second message has been provided by the user in a case where another hash value generated according to the first algorithm by using the collision generation value, the public key, and the second message, matches the hash value.

3. The verification system according to claim 1, wherein the another terminal includes a verification unit configured to output a verification result that indicates that the second message has been provided by the user in a case where another hash value generated according to the first algorithm by using the collision generation value, the public key, and the second message, matches the hash value.

4. The verification system according to claim 1, wherein
the server further generates a second hash value according to the first algorithm by using a second public key associated with the user and the hash value, and
the generation unit of the terminal is further configured to
generate another hash value according to the first algorithm by using the collision generation value, the public key, and the second message, and
generate, by the second algorithm, a second collision generation value based on the another hash value, a third message, and a second private key paired with the second public key so that the second hash value is generated in a case where the second collision generation value is input to the first algorithm along with the second public key and the third message.

5. The verification system according to any one of claims 1 to 4, wherein
the terminal further includes an authentication unit configured to access the server, perform authentication of the user, and obtain authentication completion information to be provided to the authenticated user,
the generation unit of the terminal generates the collision generation value further based on the authentication completion information, and
the server generates the hash value further based on the authentication completion information.

6. The verification system according to any one of claims 1 to 5, wherein
the server
transmits, to the terminal, a processing program in which an operation code used to execute an operation is added to a program that includes a code corresponding to a task, and
generates the hash value further based on an operation result of the operation code, and
the generation unit of the terminal executes the processing program to execute the task, and generates the collision generation value further based on the operation result of the operation code obtained in the execution of the processing program.

7. The verification system according to claim 6, wherein the operation code is added to the processing program such that the operation result is obtained in a case where the code corresponding to the task is executed in the execution of the processing program but the operation result is not obtained in a case where the code corresponding to the task is not executed.

8. An information processing device comprising:
a generation unit configured to generate a collision generation value by a second algorithm based on a first message, a second message, and a private key that is paired with a public key so that another hash value is generated in a case where the collision generation value is input to a first algorithm together with the public key and the second message, the another hash value that has a same value as a hash value generated according to the first algorithm by using the public key associated with a user and the first message in a server; and
a transmission unit configured to transmit the collision generation value and the second message to another terminal that is to be guaranteed that the second message has been provided by the user.

9. A verification method implemented by a computer, the verification method comprising:
generating a collision generation value by a second algorithm based on a first message, a second message, and a private key that is paired with a public key so that another hash value is generated in a case where the collision generation value is input to a first algorithm together with the public key and the second message, the another hash value that has a same value as a hash value generated according to the first algorithm by using the public key associated with a user and the first message in a server; and
transmitting the collision generation value and the second message to another terminal that is to be guaranteed that the second message has been provided by the user.

10. A verification program for causing a computer to perform processing comprising:
generating a collision generation value by a second algorithm based on a first message, a second message, and a private key that is paired with a public key so that another hash value is generated in a case where the collision generation value is input to a first algorithm together with the public key and the second message, the another hash value that has a same value as a hash value generated according to the first algorithm by using the public key associated with a user and the first message in a server; and
transmitting the collision generation value and the second message to another terminal that is to be guaranteed that the second message has been provided by the user.
